# DEMANDE DE BREVET EUROPEEN

(11) **EP 0 897 243 A1**
(43) Date de publication de la demande: **17.02.1999**
(21) Numéro de dépôt: 98402045.3
(22) Date de dépôt: 11.08.1998
(51) Int. Cl.: H04N 7/169

(54) **Procédé d'emission d'un signal de télévision**

(30) Priorité: 14.08.1997 FR 9710390
(71) Demandeur: FRANCE TELECOM, 75015 Paris (FR); TELEDIFFUSION DE FRANCE, 75932 Paris Cédex 15 (FR)
(72) Inventeur: Guillou, Louis, 35230 Bourg Barre (FR); Fevrier, Pierre, 35250 Saint Sulpice La Foret (FR); Lebras, François, 75016 Paris (FR)
(74) Mandataire: Signore, Robert

(57) **Abrégé**

Selon l'invention, on supprime, dans certains signaux de ligne, la salve de référence de chrominance.

Application à la télévision, notamment à péage.

## Description

### Domaine technique

La présente invention a pour objet un procédé d'émission d'un signal de télévision. Elle trouve une application générale en télévision et, notamment, dans la télévision à péage où elle permet de lutter contre les décodages pirates.

### Etat de la technique antérieure

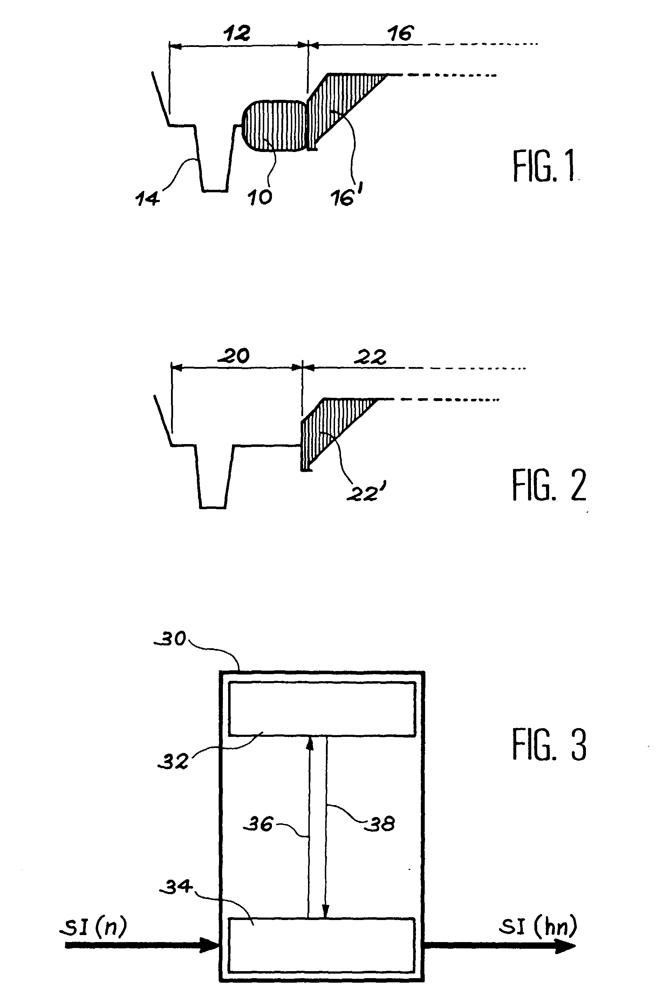

Selon chacune des trois premières normes de télévision en couleurs, à savoir NTSC, PAL et SECAM, chaque ligne utile du signal d'image doit comporter une salve de référence de chrominance pour caler les récepteurs en phase et en fréquence. Comme indiqué à la figure 1 annexée, la salve de référence de chrominance 10 se trouve sur le palier de suppression de ligne 12, juste après le signal de synchronisation de ligne 14 et juste avant le début de la partie active de la ligne 16, le signal actif portant la référence 16'.

Afin de justifier chaque nouvelle norme par rapport à la précédente, les spécifications de ces salves ont évolué du NTSC au PAL, puis du PAL au SECAM, de façon à rendre plus robuste la restitution des couleurs. En NTSC et en PAL, la chrominance est modulée en amplitude et en phase. En SECAM, la chrominance est modulée en fréquence. Il y a un seul type de salves NTSC avec une seule fréquence (3, 579545 MHz) et une seule phase. Il y a deux types de salves en PAL avec une seule fréquence (4,440625 MHz) et deux phases (+135° et -135°) en alternance d'une ligne à l'autre.

Il y a quatre types de salves en SECAM avec deux fréquences (4,40625 MHz en rouge et 4,25000 MHz en bleu) et deux phases (0 et π). Le tableau 1 résume les caractéristiques des salves du SECAM en fonction des numéros de lignes.
• La fréquence alterne d'une ligne à l'autre.
• La phase est séquencée 00π en trame impaire et ππ0 en trame paire.

**Tableau 1 :**

| **Organisation des lignes du signal d'images en SECAM** | | | | | | |
|---|---|---|---|---|---|---|
| **Numéro de ligne** | **1 mod 6** | **2 mod 6** | **3 mod 6** | **4 mod 6** | **5 mod 6** | **0 mod 6** |
| **Trame impaire** | RO | BO | Rπ | BO | RO | Bπ |
| **Trame paire** | Rπ | Bπ | R0 | Bπ | Rπ | BO |

Toutes les lignes ne sont pas utiles dans une trame.

Le PAL et le SECAM utilisent typiquement les lignes 23 à 309 en trame impaire et 336 à 622 en trame paire, soit 287 lignes utiles par trame.

Dans le cadre de la télévision à péage, certains procédés d'embrouillage du signal d'image en PAL et en SECAM permutent les lignes de chaque trame sans en respecter l'empreinte, c'est-à-dire l'ordre de succession des caractéristiques des salves en phase et en fréquence. C'est le cas du système fondé sur le brevet WO 91/13517, tel que le système connu sous le nom de SYSTER (abréviation de "système de terre").

Certains dispositifs pirates utilisent l'empreinte de la trame embrouillée pour rétablir la trame en clair. En SECAM, certains dispositifs pirates utilisent une fenêtre de test pour chaque trame embrouillée ; ces fenêtres comportent les lignes de 26 à 59 et de 340 à 372. Pour chaque trame embrouillée, les dispositifs pirates constituent une série de 34 ou 33 bits en discriminant salves rouges et salves bleues.

La présente invention propose un procédé permettant de lutter contre ces piratages.

### Exposé de l'invention

La présente invention propose d'introduire des désinformations dans les trames embrouillées, c'est-à-dire de masquer l'empreinte de la trame embrouillée, et cela en omettant ou en retirant des salves de référence de chrominance. Masquer l'empreinte est alors une contre-mesure efficace et pratiquement gratuite. Les essais effectués par le Demandeur montrent que les dispositifs pirates deviennent particulièrement inopérants à partir de quatre lignes affectées par fenêtre. Dans cette utilisation, il n'y a plus de problème de codage.

L'omission ou le retrait de certaines salves de chrominance n'affecte pas sensiblement la qualité du signal. Il faut se souvenir en effet que les normes NTSC, PAL, SECAM ont été établies à une époque où l'on ne savait pas bien reproduire les fréquences et les phases. Les téléviseurs modernes sont perturbés par des valeurs aberrantes des salves de référence de chrominance ; mais ils supportent sans problème un évanouissement sporadique des salves parce que la reproduction de fréquences et de phases y est très efficace.

Par conséquent, il est tout à fait possible d'omettre quelques salves de référence dans chaque trame sans que la qualité du service s'en trouve affectée.

De façon précise, l'invention a donc pour objet un procédé d'émission d'un signal de télévision en couleurs organisé en signaux de lignes, chaque signal de ligne utile d'une trame comprenant un palier de suppression de ligne, ce procédé étant caractérisé par le fait que, dans au moins un signal de ligne utile, il n'existe pas de salve de référence de chrominance dans le palier de suppression de ligne.

De préférence, on part d'un signal de télévision dont tous les signaux de ligne comprennent une salve de référence de chrominance et on supprime cette salve de référence dans au moins un signal de ligne.

Dans un mode de mise en oeuvre particulier, on supprime la salve de référence de chrominance pour N lignes déterminées repérées par leur rang dans une même trame comprenant P lignes.

On peut aussi répartir les P lignes de chaque trame en N groupes de P/N lignes et supprimer la salve de référence de chrominance pour une seule des lignes de chaque groupe.

L'invention s'applique notamment au cas où l'on embrouille le signal par permutation des lignes utiles.

### Brève description des dessins

- la figure 1, déjà décrite, illustre un signal de ligne classique avec salve de référence de chrominance ;
- la figure 2 montre un signal de ligne sans salve de référence de chrominance ;
- la figure 3 illustre un exemple de réalisation d'un dispositif permettant de mettre en oeuvre le procédé de l'invention.

### Exposé détaillé de modes de réalisation

Sur la figure 2, on voit un signal de ligne dans lequel le palier de suppression de ligne 20 est dépourvu de salve de référence de chrominance. Le signal d'image 22' situé dans l'intervalle de ligne 22 suit directement le palier 20. La comparaison avec la figure 1 est immédiate.

Selon l'invention, on peut soit constituer un signal d'image sans salve de référence de chrominance, soit partir d'un signal classique et enlever la salve de référence de chrominance.

On peut enlever, typiquement, les salves de référence dans 1 à 32 lignes. En outre, durant la transmission d'un film, l'image comprend souvent une partie utile complétée par deux bandes noires, l'une en haut, l'autre en bas. Les lignes composant les bandes noires ne transmettent pas de couleur. Par conséquent, les salves de référence de chrominance y sont inutiles ; on peut les supprimer sans problème. En haut et en bas de chaque trame, chaque bande noire comporte 36 lignes pour diffuser un film 16/9.

Bien entendu, le signal obtenu n'est plus en conformité avec les normes (NTSC, PAL ou SECAM), en ce qui concerne les salves de référence de chrominance. Mais, comme indiqué plus haut, les téléviseurs d'aujourd'hui n'en laissent rien paraître ; ils supportent sans problème une telle dégradation du signal d'image parce que les technologies en usage sont bien différentes de celles qui ont justifié ces trois normes.

La figure 3 montre une réalisation d'un dispositif de suppression de salves de référence 30. Ce dispositif comprend deux moyens essentiels : un micro-ordinateur 32, et un boîtier de traitement du signal 34 commandé par le micro-ordinateur 32.

Le dispositif 30 reçoit un signal d'image à la norme, soit SI(n), et réémet un signal d'image hors norme, soit SI(hn). Dans ce signal, certaines salves de référence de chrominance ont été supprimées conformément à la figure 2.

Lorsque le boîtier de traitement 34 connaît la liste des lignes à traiter pour la trame en cours, il détruit la salve dans chaque ligne indiquée. Faute d'une telle liste, le boîtier de traitement 34 n'agit sur aucune ligne de trame en cours. Dans le même temps, le boîtier de traitement 34 et le micro-ordinateur 32 échangent les informations suivantes :
- le boîtier indique au micro-ordinateur la parité de la trame en cours (flèche 36),
- le micro-ordinateur répond par une consigne à appliquer à la trame suivante (flèche 38), par exemple une liste de numéros désignant les lignes dont la salve doit être supprimée, typiquement de zéro à 32 numéros choisis parmi les 287 numéros de lignes actives.

Le codage de la consigne n'a pas grande importance ; on peut tout aussi bien utiliser une série de 36 octets où chaque bit a un rang de 0 à 287. Si le bit de rang i vaut 0, il faut conserver la salve de la ième ligne. S'il vaut 1, il faut la supprimer. Dans ce cas, pour supprimer les salves dans les bandes noires durant la diffusion du film en 16/9, la consigne comporte quatre octets à FF, 28 octets nuls et quatre octets à FF.

Pour retirer les salves des bandes noires en diffusion 16/9, il faut utiliser l'appareil avant embrouillage du signal, ce qui ne pose pas de problème particulier.

Les décodeurs SYSTER ne considèrent pas les salves et ne sont donc pas affectés par leur absence.

A côté de l'application à la lutte contre le piratage de signaux de télévision embrouillés, le procédé de l'invention permet la transmission d'informations. En effet, il y a C(P,N) façons de choisir N lignes parmi P (ou C symbolise le nombre de combinaisons de N objets parmi P). Avec P=287 et N=32, il y a (287x286x...x257x256)/(32!) possibilités. Ce nombre vaut environ 282.10³⁹, soit environ 2¹³⁸ combinaisons.

En se limitant à 32 lignes par trame, le dispositif permet donc de diffuser jusqu'à 138 bits par trame, ce qui est très appréciable.

Un codage élémentaire consiste à découper l'ensemble des 287 lignes en 31 tranches de 9 lignes, puis une dernière tranche de huit lignes. En affectant une ligne et une seule dans chaque tranche, on dénombre 8.9³¹ possibilités, soit environ 3,05.10³⁰. Ce codage permet de transmettre un peu plus de cent bits.

Un autre codage (plus conforme à l'informatique) consiste à considérer les 256 premières lignes par tranche de huit lignes. Dans chaque tranche, on enlève la salve d'une seule ligne, ce qui permet de coder 32 fois trois bits, soit 96 bits en tout.

## Revendications

1. Procédé d'émission d'un signal de télévision en couleurs organisé en signaux de lignes, chaque signal de ligne utile d'une trame comprenant un palier de suppression de ligne, ce procédé étant caractérisé par le fait que dans au moins un signal de ligne utile, il n'existe pas de salve de référence de chrominance dans le palier de suppression de ligne.

2. Procédé selon la revendication 1, dans lequel on part d'un signal de télévision dont tous les signaux de ligne comprennent une salve de référence de chrominance et on supprime cette salve de référence dans au moins un signal de ligne.

3. Procédé selon la revendication 2, dans lequel on supprime la salve de référence de chrominance pour N lignes déterminées repérées par leur rang dans une même trame comprenant P lignes.

4. Procédé selon la revendication 3, dans lequel on divise les P lignes de chaque trame en N groupes de P/N lignes et on supprime la salve de référence de chrominance pour une seule ligne de chaque groupe.

5. Procédé selon la revendication 3, dans lequel les N lignes parmi P dont la salve de référence de chrominance a été supprimée définissent une information, cette information étant transmise avec le signal de télévision.

6. Procédé selon l'une quelconque des revendications 1 à 5, dans lequel, en outre, on embrouille le signal par permutation des lignes utiles.
